# EUROPEAN PATENT APPLICATION

(11) **EP 4 641 207 A1**
(43) Date of publication of application: **29.10.2025**
(21) Application number: 23906512.1
(22) Date of filing: 09.11.2023
(51) Int. Cl.: G01N 35/00, G01N 35/02

(54) **CONTAINER STORAGE DEVICE**

(30) Priority: 20.12.2022 JP 2022203299
(71) Applicant: HITACHI HIGH-TECH CORPORATION, Tokyo 105-6409 (JP)
(72) Inventor: KOHARA, Yasuhiro, Tokyo 105-6409 (JP); SASAKI, Shunsuke, Tokyo 105-6409 (JP); CHIDA, Saori, Tokyo 105-6409 (JP); SHICHIJI, Masaru, Tokyo 105-6409 (JP)
(74) Representative: MERH-IP Matias Erny Reichl Hoffmann Patentanwälte PartG mbB
(86) International application number: PCT/JP2023/040341
(87) International publication number: WO 2024/135141

(57) **Abstract**

Provided is a highly reliable container storage apparatus that facilitates management of a container of an automatic analyzer and supplies the container to the automatic analyzer. The configuration for this purpose is as follows. The container storage apparatus is connectable to the analyzer configured to analyze a specimen and carries in and out the container between the container storage apparatus and the analyzer, the container storage apparatus including: a container storage unit configured to store a plurality of first containers containing a first liquid to be used for analysis of a specimen and a plurality of second containers containing a second liquid to be used for maintenance of the analyzer; and a refrigeration unit configured to refrigerate the storage unit.

## Description

### Technical Field

The present invention relates to a container storage apparatus.

### Background Art

In the field of an automatic analyzer that performs qualitative and quantitative analysis of a sample such as blood or urine (hereinafter referred to as a specimen), a technique of transferring a reagent, a specimen, or the like between a storage unit and an analysis processing unit has been disclosed (see PTL 1).

### Citation List

### Patent Literature

PTL 1: Japanese Patent No. 4147596

### Summary of Invention

### Technical Problem

In PTL 1, only provision of bottles for storing various solutions such as a cleaning solution, a storage for storing various reagents, and the like is shown, and a method for storing a container is not considered at all.

That is, in the current container storage management for an automatic analyzer, there is a problem that a user needs to go to an external refrigerator to retrieve a detergent and an accuracy control specimen for each use. There is also a problem that a cleaning process and accuracy control are separately performed.

Therefore, an object of the invention is to provide a highly reliable container storage apparatus in which management of a containers is simplified.

### Solution to Problem

A container storage apparatus according to an aspect of the invention is connectable to an analyzer configured to analyze a specimen and carries in and out a container between the container storage apparatus and the analyzer, the container storage apparatus including: a container storage unit configured to store a plurality of first containers containing a first liquid to be used for analysis of a specimen and a plurality of second containers containing a second liquid to be used for maintenance of the analyzer; and a refrigeration unit configured to refrigerate the container storage unit.

### Advantageous Effects of Invention

According to the invention, it is possible to provide a highly reliable container storage apparatus that facilitates management of a container.

### Brief Description of Drawings

[FIG. 1] FIG. 1 is a diagram illustrating an example of an automatic analysis system in which a container storage apparatus is connected to an automatic analyzer.
[FIG. 2] FIG. 2 is a diagram illustrating an example of a main screen displayed on a display unit.
[FIG. 3] FIG. 3 is a diagram illustrating an example of a container information registration screen.
[FIG. 4] FIG. 4 is a diagram illustrating an example of a rack range registration screen.
[FIG. 5] FIG. 5 is a diagram illustrating an example of a screen for registering groups.
[FIG. 6] FIG. 6 is a diagram illustrating an example of a screen for setting a container carry-out time.
[FIG. 7] FIG. 7 is a flowchart illustrating container storage processing.
[FIG. 8] FIG. 8 is a flowchart illustrating container carry-out processing.
[FIG. 9] FIG. 9 is a flowchart illustrating additional carry-out processing after a container is carried out.

### Description of Embodiments

Hereinafter, an embodiment of the invention will be described in order with reference to the drawings. The embodiment is an embodiment of a container storage apparatus that can be connected to an analyzer configured to analyze a specimen and that carries a container in and out between the analyzer and the container storage apparatus, the container storage apparatus including: a container storage unit configured to store a plurality of first containers that contain a first liquid to be used for analysis of a specimen and a plurality of second containers that contain a second liquid to be used for maintenance of the analyzer; and a refrigeration unit configured to refrigerate the container storage unit. The phrase "used for analysis of a specimen" related to the first liquid also includes the meaning of "used for calibration of a reagent or accuracy control of analysis" or "correctly executing analysis". That is, the first liquid is assumed to be an accuracy control specimen or a standard solution. The second liquid used for maintenance of the analyzer is assumed to be a cleaning solution (including a detergent used for cleaning the analyzer and cleaning water. Hereinafter, it is mainly referred to as a "detergent"). Further, the container storage unit capable of storing a plurality of first containers and second containers corresponds to a disc 4f including a compartment 4b described later, and the refrigeration unit corresponds to a refrigeration unit 4g described later.

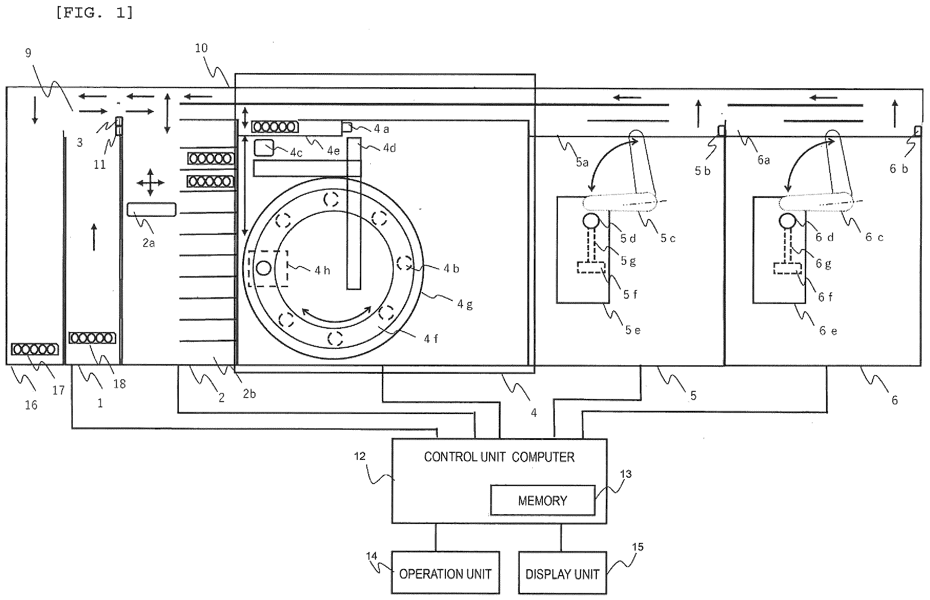

FIG. 1 is a diagram illustrating an example of an automatic analysis system in which a container storage apparatus is connected to an automatic analyzer (hereinafter, an analyzer).

### (1-1) Rack loading unit 1

A rack loading unit 1 of an automatic analyzer system is a loading unit for loading a rack 18, on which a plurality of containers 17 can be placed, into an analyzer 5 and/or an analyzer 6, and is capable of automatically loading a plurality of racks 18 sequentially that are placed simultaneously by an operator. The rack loading unit 1 is provided with a rack ID acquisition unit 11 configured to read identification information (ID) given in the form of a bar code, an IC tag, or the like attached to a rack, and a container ID acquisition unit 3 configured to read identification information (ID) given to each container 17 in the form of a bar code, an IC tag, or the like. The identification information is read for each rack 18 or container 17 loaded by the operator and is output to a control unit 12. The rack 18 and the container 17, for which reading of the identification information is completed, are sequentially sent to a feed transport line 9. As the container 17, any container may be used as long as the container conforms to a predetermined standard. For example, a test tube, a blood collection container, or the like is used in addition to a specimen container dedicated to an analyzer. One or more (five in the embodiment) containers 17 are held in the rack 18, and are transported to the feed transport line 9 in units of racks.

FIG. 1 shows that the control unit 12 of a container storage apparatus 4 is also used as a control unit of the entire automatic analysis system. However, the control unit may be independent for each of the container storage apparatus 4, the analyzers 5 and 6, and transport lines (the feed transport line 9 and a return transport line 10).

### (1-2) Feed transport line 9 and return transport line 10

The feed transport line 9 is a path for feeding the rack 18 from the rack loading unit 1 to a rack collection unit 16 via a rack storage unit 2, the container storage apparatus 4, the analyzers 5 and 6, and the like. The return transport line 10 is a path for returning the rack 18 to the rack collection unit 16. These transport lines transport the rack 18 to each of the analyzers 5 and 6 based on an instruction from the control unit 12.

### (1-3) Rack storage unit 2

The rack storage unit 2 temporarily stores the rack 18, and includes a rack moving mechanism 2a that carries out the rack 18 loaded from the rack loading unit 1 to the feed transport line 9, takes in the rack 18 from the return transport line 10, and moves the rack 18 to a plurality of storage positions 2b provided in the rack storage unit 2. Information on the storage position 2b of each rack 18 and specimen information are managed in association with each other and stored in a memory 13.

### (1-4) Container storage apparatus 4

The container storage apparatus 4 is an apparatus capable of storing the container 17 such as a container containing a detergent, a container containing an accuracy control specimen, a container containing a standard solution, and/or an empty container, and can be connected to the analyzers 5 and 6 that analyze a specimen. The container storage apparatus 4 is configured including: a transfer line 4e having a function of taking in the rack 18 from the feed transport line 9 and sending out the rack 18 to the feed transport line 9; an identification information reader 4a adjacent to the transfer line 4e and configured to read identification information of the rack 18; a container ID acquisition unit 4c configured to read identification information of the container 17; a robot arm (hereinafter, arm) 4d configured to grip the container 17; the disc 4f that has compartments 4b arranged concentrically or in parallel and is rotatable in a horizontal direction, the compartment being capable of storing the container 17; the refrigeration unit 4g configured to cool the container 17 stored in the compartment 4b in the disc 4f; a lid (not shown) located above the refrigeration unit 4g and having an opening portion; and a shutter 4h having a function of opening and closing the lid for taking the container 17 into and out of the refrigeration unit 4g. The shutter 4h covers the opening portion of the lid during standby, and keeps a temperature of the refrigeration unit 4g fixed. The shutter 4h is opened before storing the container 17 in the compartment 4b or before taking out the container 17, and the refrigeration unit 4g can be accessed from the outside.

Although FIG. 1 illustrates a configuration in which the container storage apparatus 4 includes the feed transport line 9 and the return transport line 10, the container storage apparatus 4 may not include a transport line, and may be configured to be connectable to a transport line when connected to another device.

### (1-5) Analyzers 5 and 6

The analyzers 5 and 6 are, for example, an ion selective electrode (ISE) analysis unit, and are configured including: sampling lines 5a and 6a that are detachably provided with respect to the feed transport line 9 and have functions of taking in the rack 18 from the feed transport line 9, moving to a sampling position, and sending out the rack 18 to the feed transport line 9 or the return line 10; identification information readers 5b and 6b provided at the respective sampling lines 5a and 6a and configured to read identification information of the rack 18 and the container 17; pipetters 5c and 6c configured to aspirate a specimen to be analyzed or a detergent; diluent tanks 5d and 6d in which a specimen to be analyzed and a reagent are mixed; tubes 5g and 6g for feeding a test solution obtained by mixing the specimen to be analyzed and the reagent in the diluent tanks 5d and 6d; ion selective electrodes 5f and 6f configured to measure an electrolyte concentration in the test solution; and a computer configured to control the analyzers.

The analyzers 5 and 6 may be an analysis unit that mixes a specimen and a reagent in a reaction container (not shown) held on a reaction disc (incubator) to cause a reaction therebetween and measures absorbance of a reaction liquid with a photometer to analyze biochemical components in the specimen, or may be an immunoassay unit that mixes a specimen and a reagent in a reaction container held on a reaction disc (incubator) to cause a reaction therebetween and analyzes trace components in blood such as hormones in the specimen with high sensitivity.

### (1-6) Control unit 12

The control unit 12 controls necessary portions of each of the analyzers 5 and 6, controls mechanisms related to the feed transport line 9 and the return transport line 10, and executes calculation and control necessary for various types of information processing. The control unit 12 is provided with the memory 13, and is connected to an operation unit 14 for inputting various types of data and instructions and a display unit 15 for displaying information on a screen. As the memory 13, for example, a built-in hard disk can be used. Examples of program used in the control unit 12 include a program for executing cleaning processing, a control program for executing analysis processing on a specimen to be analyzed, a program for executing carry-out processing of a detergent, an accuracy control specimen, or the like based on a preset time or container carry-out rule, and check processing for managing availability of a detergent or an accuracy control specimen.

### (2) Container storage and container taking-out

The container storage is a process of storing the container 17 in the container storage apparatus 4 in advance. When storing a new container, the container 17 for which a specimen code is registered in the memory in advance by a user is placed on the rack 18 having a rack ID included in a rack range (range of rack ID) registered in advance by the user, and the rack 18 is placed on the rack loading unit 1. The rack 18 placed on the rack loading unit 1 is moved to the feed transport line 9, is identified as a rack for the container storage apparatus by the rack ID acquisition unit 11, and is transported to the transfer line 4e of the container storage apparatus 4. The container 17 placed on the rack 18 transported to the transfer line 4e is gripped by the arm 4d and is moved to the container ID acquisition unit 4c. An identifier attached to the container 17 is read by the container ID acquisition unit 4c, and the container 17 is transferred from the rack 18 into the compartment 4b of the disc 4f using the arm 4d. The transferred container 17 is stored in the refrigeration unit 4g in a cooled state until an instruction of taking out from the compartment 4b is given.

When the container 17 transported from the container storage apparatus 4 to the analyzers 5 and 6 is to be stored again, the rack 18 transported to the sampling lines 5a and 6a of the analyzers 5 and 6 is transported to the return transport line 10 after the pipetters 5c and 6c access the container 17, and is transported to the rack storage unit 2. The container 17 is moved from the rack storage unit 2 to the transfer line 4e of the container storage apparatus 4, and is stored in the compartment 4b by using the arm 4d as described above.

The container taking-out is a process of taking out the container 17 stored in the container storage apparatus 4, and is performed in a reverse procedure to the container storage.

### (2-1) Container storage and container taking-out setting

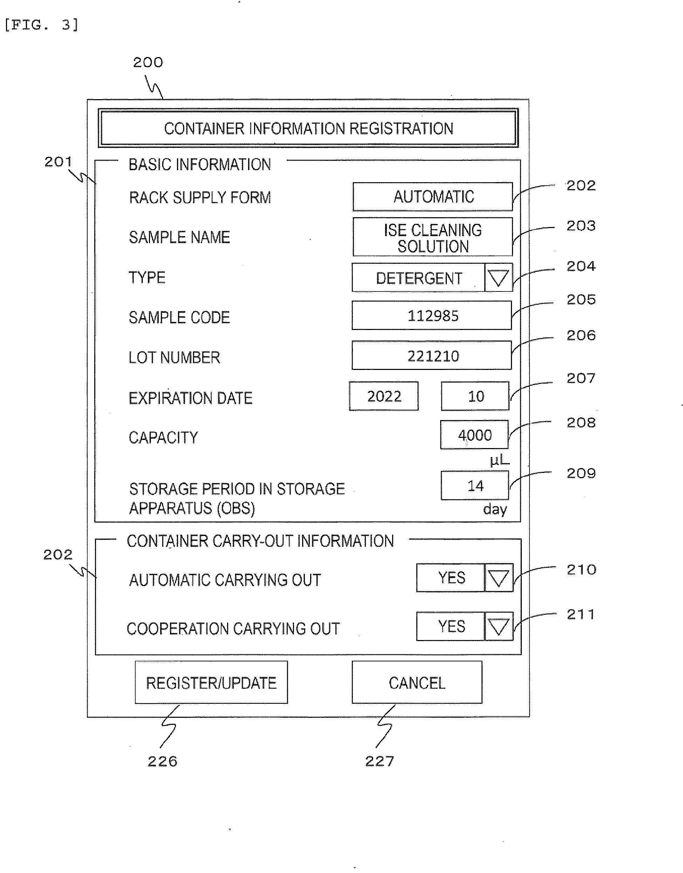

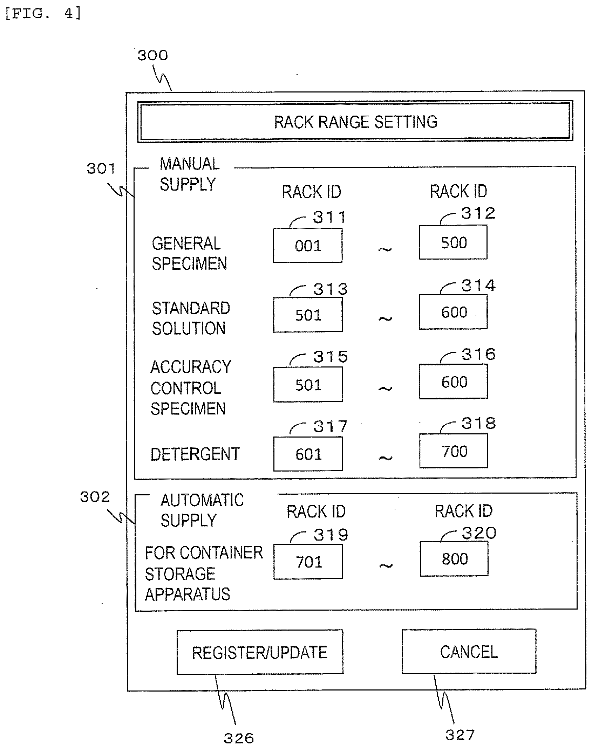

Setting of container storage and container taking-out is performed by displaying a registration information screen 200 or 300 (see FIGS. 3 and 4, and the like described later) or the like on the display unit 15 by control of the control unit 12 and performing an operation on the operation unit 14. That is, registration and update of information on the detergent and the accuracy control specimen are to set a protocol of taking out the detergent and the accuracy control specimen from the container storage apparatus 4, and the container information registration screen 200, the rack range setting screen 300, a group registration setting screen 500, and the like constitute a container taking-out protocol setting screen.

In the embodiment, the setting and operations of container carry-out will be described with an example in which, after a detergent used for device maintenance is taken out from a container storage unit, an accuracy control specimen used for accuracy control is taken out.

A transport protocol can be set in the same manner in a case where a detergent needs to be taken out after an accuracy control specimen or a standard solution is taken out.

### (2-1.1) Main screen 100

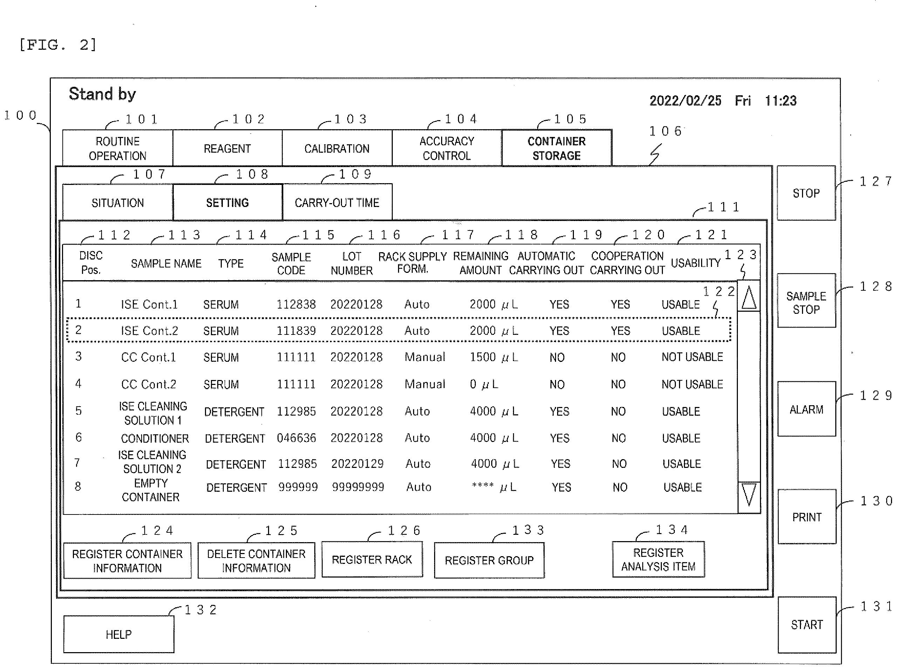

FIG. 2 is a diagram illustrating an example of a main screen 100 displayed on the display unit 15. The main screen 100 is provided with an information display area 106 for displaying various types of information, various instruction buttons 127 to 131 for instructing operations of the analyzers 5 and 6, and a help button 132 for displaying information for assisting the operation of the operator.

### (2-1.1.1) Information display area 106

The information display area 106 is provided with a routine operation tab 101, a reagent tab 102, a calibration tab 103, an accuracy control tab 104, and a container storage tab 105, and by selecting these tabs, target information can be displayed in the information display area 106. FIG. 2 illustrates a case where the container storage tab 105 is selected and a container storage setting area 111 for displaying information on container storage is displayed in the information display area 106.

### (2-1.1.2) Container storage information display area 106

The container storage information display area 106 is provided with a situation tab 107, a setting tab 108, and a carry-out time tab 109, and by selecting these tabs, target information can be displayed in the container storage setting area 111. FIG. 2 illustrates a case where the setting tab 108 is selected and information on settings of a detergent, an accuracy control specimen, and an empty container is displayed in the container storage setting area 111.

When the setting tab 108 is selected, in the container storage setting area 111, the following are displayed: a disc position column 112, a sample name column 113, a type column 114, a sample code column 115, a lot number column 116, a rack supply form column 117, a remaining amount column 118, an automatic carry-out column 119, a cooperation carry-out column 120, a usability column 121, a scroll button 123 for rolling a display area of these types of information, a container information registration button 124 for displaying the container information registration screen 200 when newly registering a detergent or an accuracy control specimen or when confirming container information selected by a cursor 122, a container information deletion button 125 for deleting container information selected by the cursor 122, a rack registration button 126 for displaying the rack range setting screen 300, a group registration button 133 for displaying the group registration setting screen 500, and an analysis item registration button 134 for displaying a screen (not shown) for confirming a measurement condition of a sample selected by the cursor 122.

On the screen (not shown) for confirming the measurement condition displayed by the instruction of the analysis item registration button 134, matters are set such as which measurement item the specimen corresponds to, and under which condition a measurement request is automatically created (container carry-out processing execution interval (a period of time), container carry-out processing execution interval (number of specimens), whether to measure another specimen for confirmation when a measurement result indicates an abnormality, whether to carry out the container at the time of new reagent registration, and whether to carry out the container at the time of changing a calibration curve).

Regarding information on a registered accuracy control specimen, in addition to the information shown in the display columns 113 to 121 (however, partially overlapping), the control unit 12 stores, in the memory 13 or the like, as specimen state information, usability indicating whether the specimen is usable for measurement, a storage period (OBS) after the specimen is stored in the container storage apparatus 4, a remaining amount of a detergent, a remaining amount of the accuracy control specimen, measurements indicating the number of times used for measurement, an expiration date, and a container unique number for identifying a different container in the same lot. In addition, the control unit 12 can display and select, as alarms to be notified, unregistered container, specimen remaining amount insufficiency, empty rack insufficiency, passing of specimen expiration date, passing of specimen OBS, and the like in a list format.

### (2-1.1.3) Instruction buttons 127 to 131

The main screen 100 is provided with the instruction buttons 127 to 131 for the operator to instruct the operation of the automatic analyzer. As the instruction buttons, the stop button 127 for stopping the automatic analyzer, the sample stop button 128 for stopping sampling, the alarm button 129 for notifying an abnormality of the device, the print button 130 for instructing printing, and the start button 131 for starting the automatic analyzer are provided.

### (2-1.2) Container information registration screen 200

FIG. 3 is a diagram illustrating an example of a container information registration screen. FIG. 4 is a diagram illustrating an example of a rack range setting screen. FIG. 3 illustrates a case of setting a new container. FIG. 4 illustrates a case of setting rack allocation for temporary storage in the rack storage unit 2 for automatic container carry-out.

In FIG. 3, the container information registration screen 200 is provided with a basic information area 201 for inputting basic information of a container, a container carry-out information area 202 for inputting information on container carry-out, a registration/update button 226 for registering a container or updating container information with content input to the information areas 201 and 202 and returning to the main screen 100, and a cancellation button 227 for discarding the content input to information areas 202 to 211 and returning to the main screen 100.

The basic information area 201 is provided with input fields 202 to 209 for inputting a rack supply form 202, a sample name 203, a type 204, a sample code 205, a lot number 206, an expiration date 207, a capacity (µL) 208, and a storage period in storage apparatus 209. The input to each input field may be direct input by an input means (for example, a keyboard or a pointing device) of the operation unit 14, or may be selective input by pull-down such as the type input field 204.

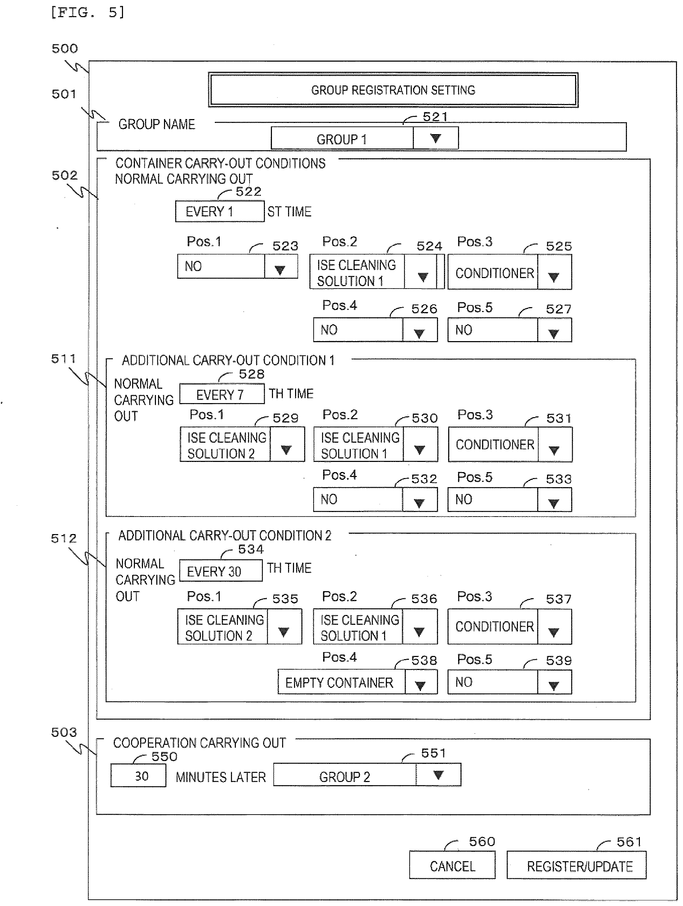

The container carry-out information 202 is provided with an input field for selecting whether automatic carry-out 210 or cooperation carry-out 211 can be set. Here, a container for which "Yes" is selected can be selected in the group registration illustrated in FIG. 5.

The rack range setting screen 300 in FIG. 4 is provided with an area 301 for allocating a rack to be manually supplied when transporting from the rack loading unit 1 to the analyzers 5 and 6, a rack allocation area 302 for causing an empty rack to stand by in the rack storage unit 2 in advance and automatically supplying the rack, a registration/update button 326 for registering a specimen or updating specimen information with content input to the information areas 301 and 302 and returning to the main screen 100, and a cancellation button 327 for discarding the content input to information areas 311 to 320 and returning to the main screen 100.

The manual supply area 301 is provided with the area 311 for inputting a general specimen rack ID start number, the area 312 for inputting a general specimen rack ID end number, the area 313 for inputting a standard solution rack ID start number, the area 314 for inputting a standard solution rack ID end number, the area 315 for inputting an accuracy control specimen rack ID start number, the area 316 for inputting an accuracy control specimen rack ID end number, the area 317 for inputting a detergent rack ID start number, and the area 318 for inputting a detergent rack ID end number.

The automatic supply area 302 is provided with the area 319 for inputting a container storage apparatus rack ID start number and the area 320 for inputting a container storage apparatus rack ID end number.

FIG. 5 is a diagram illustrating an example of a screen for registering a group. The group registration setting screen 500 is a screen for setting a combination of containers to be carried out, and includes an area 501 for selecting a group name, an area 502 for inputting a normal carry-out condition, an area 511 for inputting an additional carry-out condition 1, an area 512 for inputting an additional carry-out condition 2, and an area 503 for inputting a cooperation carry-out condition. The group name can be selected (521), and each area is provided with an input area (522, 528, 534) so that a container transfer condition to a rack according to the number of times of carry-out can be specified. In addition, input fields 523 to 527, 529 to 533, and 535 to 539 for specifying which position of the rack (here, five positions) the container is to be placed in are provided (selected from containers registered in FIG. 2).

The cooperation carry-out is provided with an input field 551 for specifying a group for which container carry-out is additionally performed after container transfer from the container storage apparatus to the rack 18 for the group 521 being set is performed. An input field 550 is provided for specifying how many minutes should elapse before execution of carry-out of the associated group after the whole group is carried out.

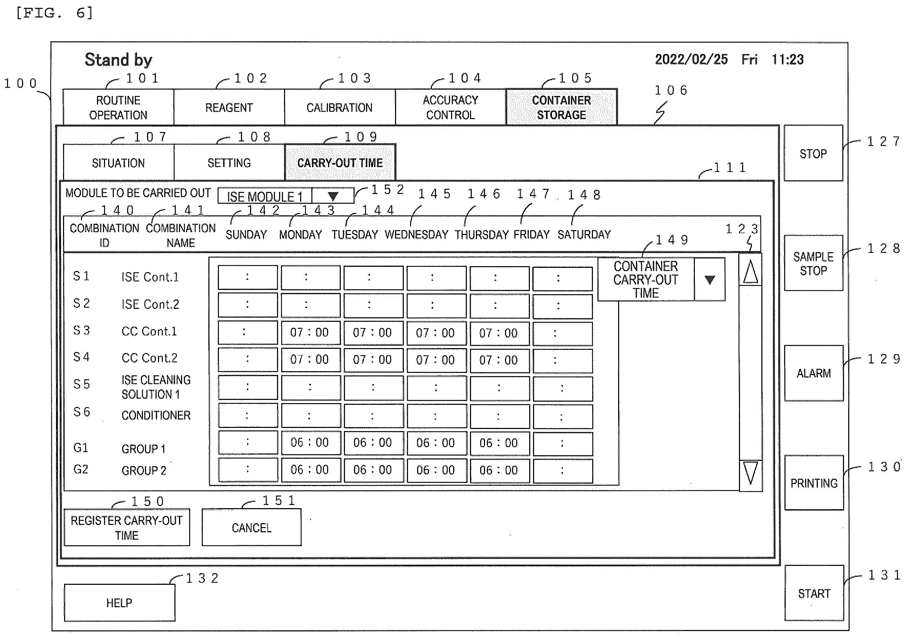

FIG. 6 is a diagram illustrating an example of a screen for setting a container carry-out time, that is, a screen for setting the carry-out time of the container set on the container information registration screen 200 in FIG. 3 or the group registration setting screen 500 in FIG. 5. When the carry-out time tab 109 is selected and a carry-out target module is selected in a carry-out target module selection area 152, in the container storage setting area 111, there are provided a combination ID field 140, a combination name field 141, and day-of-week fields 142 to 148 for displaying registered sample names and group names in a list form, and a scheduled carry-out time input field 149 provided at positions where the sample name and the day-of-week field intersect. The scroll button 123 for scrolling the display area of the information, a carry-out time registration button 150 for confirming the information when the container carry-out time is newly registered or updated, and a cancellation button 151 for discarding the input information are arranged.

In addition to the time, the container carry-out reservation may be specified based on the number of times a specimen probe is used in the analyzers 5 and 6, a period of time when the analyzers 5 and 6 are in a standby state, a period of time when the analyzers 5 and 6 are in an operating state, and a maintenance execution state of the analyzers 5 and 6.

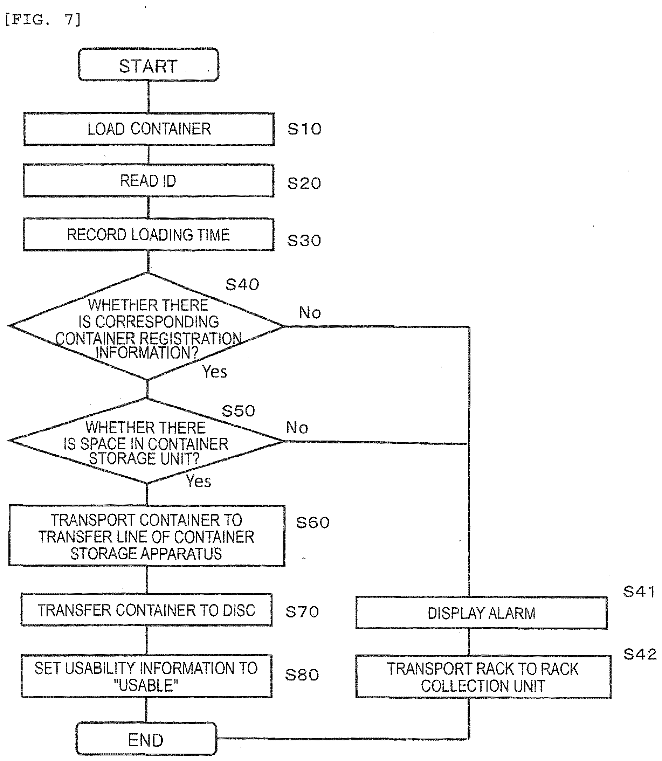

FIG. 7 is a flowchart illustrating container storage processing. When the rack 18, on which the container 17 containing a liquid such as a detergent or an accuracy control specimen is placed, is loaded into the rack loading unit 1 (step S10), the control unit 12 reads identification information given to the rack 18 or each container 17 (step S20), and records a loading time (step S30).

Next, it is determined whether there is information on a liquid corresponding to the read identification information (step S40). If the determination result is No, an alarm is displayed on the display unit 15 (step S41), the rack 18 is transported to the rack collection unit 16 (step S42), and the processing is ended. If the determination result in step S40 is Yes, it is determined whether there is a container storable space in the container storage apparatus 4 (step S50). If the determination result is Yes, the container 17 is transported to the transfer line 4e of the container storage apparatus 4 (step S60), the container 17 is taken out by the arm 4d from the rack 18 on the transfer line, the arm 4d moves the container 17 to the container ID acquisition unit 4c, and the container ID is read. Thereafter, the disc 4f is rotated to move the empty compartment 4b to a position of the shutter 4h.

The shutter 4h is opened by a motor, and a part of the lid is opened. After the opening of the lid, the arm 4d is moved from a barcode reading position to the opening portion while gripping the container, and the arm 4d moved to above the opening portion is lowered while gripping the container 17 to store the container 17 in the compartment 4b (step S70). After the container 17 is stored, the arm 4d is raised and moved to the barcode reading position, entering a standby state. Thereafter, the shutter 4h is closed, and the container storage process is completed. Thereafter, regarding the usability information of a liquid such as the accuracy control specimen, "usable" is recorded (step S80), and the processing ends.

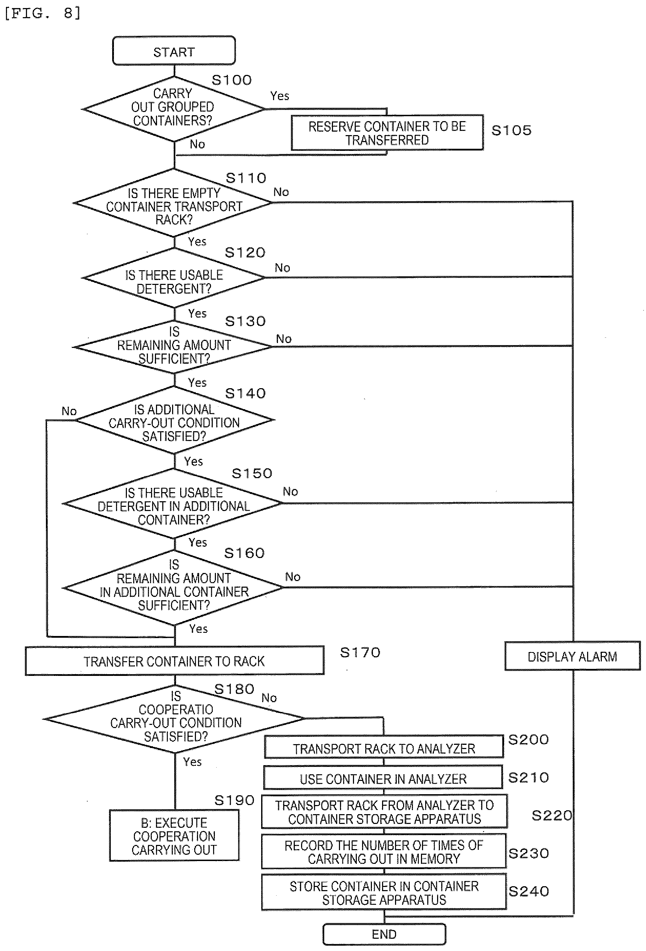

FIG. 8 is a flowchart illustrating container carry-out processing, and illustrates a method of taking out the container 17 stored in the container storage apparatus 4 in FIG. 7 from the compartment 4b and transporting the container 17 to the analyzers 5 and 6. When a container carry-out time comes, it is determined whether grouped containers are to be carried out (step S100). In the case of Yes, a carry-out reservation is made for the grouped containers (step S105), and in the case of No, it is determined whether there is a transport empty rack in the rack storage unit 2 or at the transfer line 4e (step S110). Then, in the case of Yes, it is determined whether there is a usable detergent container (whether a container containing a detergent to be taken out is stored (whether a user has made a reservation for taking out but has forgotten to put in the container), whether there is a container but an expiration date of the detergent therein has passed, or the like) (step S120), and in the case of Yes, it is determined whether a detergent remaining amount is sufficient (step S130).

Next, it is determined whether an additional carry-out condition is satisfied (step S140), and in the case of No, the transfer of the container from the compartment 4b is started (step S170). Further, it is determined whether a cooperation carry-out condition is satisfied (step S180), and in the case of No, the rack 18 on which the container is placed is transported to the analyzer (step S200). The detergent is consumed in the analyzer (step S210), the rack 18 is transported from the analyzer to the container storage apparatus 4 (step S220), the number of times of carry-out of the container is recorded in the memory (step S230), the container is transferred from the rack to the compartment 4b of the container storage apparatus 4 (step S240), and the processing ends.

When there is no empty rack for container transport, an alarm is displayed and the processing ends. In addition, in the case of a request for carry-out in groups, transfer of grouped containers is reserved. It is determined whether there is a usable detergent, and in the case of No, an alarm is issued and the processing is stopped. It is determined whether the remaining amount is sufficient, and in the case of No, an alarm is issued and the processing is stopped.

In addition, it is determined whether the additional carry-out condition is satisfied, and in the case of Yes, it is determined whether an additional detergent is usable (step S150). In the case of Yes, it is determined whether a remaining amount of the additional detergent is sufficient (step S160), and in the case of Yes, the transfer of the container is started. It is determined whether an additional container is usable (step S150), and in the case of No, an alarm is issued and the processing ends. It is determined whether the remaining amount of the additional detergent is sufficient (step S160), and in the case of No, an alarm is issued and the processing is stopped. It is determined whether the cooperation carry-out condition is satisfied (step S180), and in the case of Yes, a cooperation carry-out step is executed (step S190).

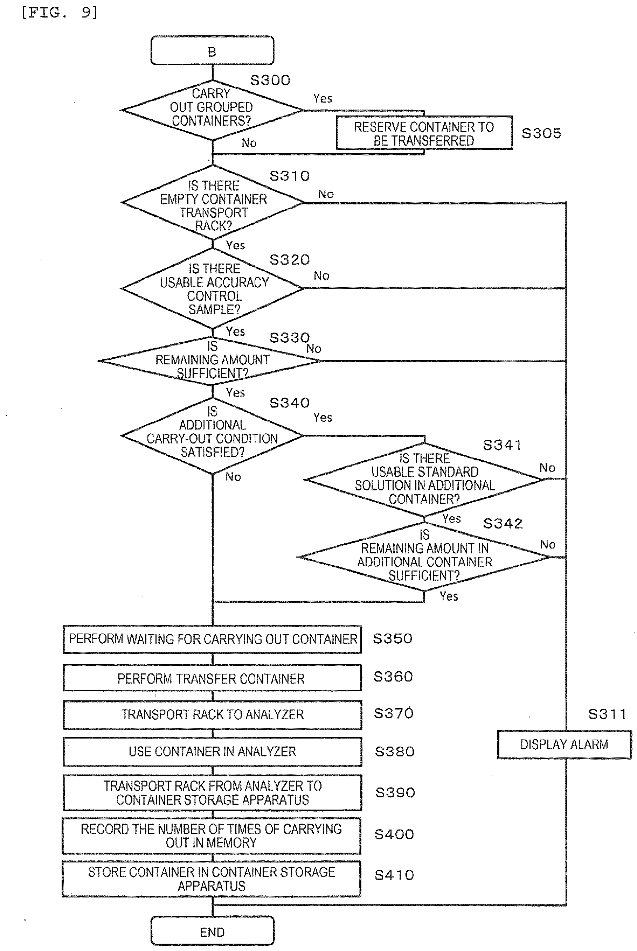

FIG. 9 is a flowchart illustrating cooperation carry-out processing after container carry-out. First, it is determined whether there is grouped container carry-out of cooperation carry-out (step S300). In the case of Yes, a carry-out reservation is made for grouped containers (step S305), and in the case of No, it is determined whether there is an empty rack for container transport (step S310). In the case of Yes in step S310, it is determined whether there is a usable accuracy control specimen container (whether a container containing an accuracy control specimen to be taken out is stored (whether the user has made a reservation for taking out but has forgotten to put in the container), whether there is a container but an expiration date of the accuracy control specimen therein has passed, or the like) (step S320), and in the case of Yes, it is determined whether the remaining amount is sufficient (step S330). In the case of Yes in step S330, it is determined whether an additional carry-out condition is satisfied (step S340). In the case of No in step S340, the transfer of the accuracy control specimen container is in standby for a predetermined period of time, that is, Waiting for specimen carry-out is performed (step S350). Thereafter, the accuracy control specimen container is transferred to the rack (step S360), the rack on which the container is placed is transported to the analyzer (step S370), the accuracy control specimen is consumed in the analyzer (step S380), the rack 18 is transported from the analyzer to the container storage apparatus 4 (step S390), the number of times of carry-out is recorded in the memory 13 (step S400), the container is transferred to the disc 4f (step S410), and the processing ends.

When the request for cooperation carry-out is grouped carry-out, a carry-out reservation for containers registered as a group is confirmed (step S305). In the case of No in steps S310, S320, and S330, an alarm is issued and the processing ends (step S311).

Further, it is determined whether the additional carry-out condition is satisfied (step S340), and in the case of Yes, it is determined whether there is a standard solution container registered in the additional carry-out condition (whether a container containing a standard solution to be taken out is stored (whether the user has made a reservation for taking out but has forgotten to put in the container), whether there is a container but an expiration date of the standard solution therein has passed, or the like) (step S341).

In the case of Yes, it is determined whether the standard solution remaining amount in the additional container is sufficient (step S342). In the case of Yes, Waiting for standard solution carry-out is executed (step S350). It is determined whether there is a container registered in the additional carry-out condition (step S341), and in the case of No, an alarm is issued and the processing ends (step S311). It is determined whether the specimen in the additional container is sufficient (step S342), and in the case of No, an alarm is issued and the processing ends (step S311).

### (5) Operations

Operations of the embodiment configured as described above will be described.

First, the operator registers container information on a detergent, a standard solution, a specimen to be analyzed such as an accuracy control specimen by the operation unit 14 or the like based on setting screens displayed on the display unit 15.

For example, in a case of a container containing a detergent, the container information is registered based on a screen of the container information registration screen 200 displayed on the display unit 15. Subsequently, the rack 18 on which the container 17 containing the detergent is placed is loaded into the rack loading unit 1. When the rack 18, on which the container 17 containing the detergent used for cleaning the analyzer as a specimen to be analyzed, is loaded into the rack loading unit 1, the rack ID acquisition unit 11 checks a rack ID (confirms that the rack ID is an ID number for the container storage apparatus indicated by 319 and 320 on the rack range setting 300) (step S20 in FIG. 7). Identification information (ID) of a specimen is read by the container ID acquisition unit 3, a loading time is recorded, and specimen information (specimen code) stored in the memory 13 is referred to (step S30 in FIG. 7).

When the container information is acquired by the container ID acquisition unit 3, the container set on the container information registration screen 200 is in the rack 18 (step S40 in FIG. 7), and there is the empty compartment 4b for storing the container 17 in the corresponding disc 4f (step S50 in FIG. 7), the container is transported to the transfer line 4e of the container storage apparatus 4 (step S60 in FIG. 7). When there is no specimen information corresponding to the acquired identification information, an alarm is displayed on the display unit 15 (step S41 in FIG. 7), the rack 18 is transported to the rack collection unit 16 (step S42 in FIG. 7), and the processing ends.

After the rack 18 is transported to the transfer line 4e of the container storage apparatus 4, the arm 4d grips the container 17 placed on the rack 18 on the transfer line 4e, the container 17 is transported from the transfer line onto the container ID acquisition unit 4c, and a specimen ID is read and collated with the information displayed on 200 in FIG. 3. During this time, the shutter 4h is operated to allow access to the compartment 4b from the outside.

The container 17 is moved from the container ID acquisition unit 4c to the shutter 4h by the arm 4d and is stored in the compartment 4b, then the arm 4d is retracted to the barcode reading position, and the shutter 4h is closed (step 70 in FIG. 7). Then, regarding usability information of the specimen information, "usable" is recorded (step S80 in FIG. 7), and the container storage processing is ended.

For the accuracy control specimen contained in the container 17 placed on the rack 18 held in the container storage apparatus 4 as described above is subjected to check processing for managing the usability thereof at all times or at predetermined intervals.

In the check processing, it is checked whether an expiration date set in container control specimen information is exceeded, whether a remaining amount is equal to or less than a set value, and a period of stabilization after storage, and if determination results thereof are all NO, no operation is performed. When at least one condition is satisfied, the usability information is set to "not usable", an alarm is displayed on the display unit 15 (step S311 in FIG. 9), and the processing is ended.

As described above, when execution of the container carry-out processing is instructed by an input of an execution instruction using the operation unit 14 or by compliance with an execution condition in a state where the container 17 is held in the compartment 4b, first, it is determined whether grouped containers specified in the group registration setting 500 in FIG. 5 are to be carried out (step S100 in FIG. 8).

In the case of grouped container carry-out, the determination of S110 to S130 is performed for each of the corresponding containers (in the case of 500 in FIG. 5, an ISE cleaning solution and a conditioner). In the case of non-grouped container carry-out, it is checked whether a rack is present in the rack storage unit 2 or at the transfer line 4e (S110 in FIG. 9), whether there is a usable detergent container (S120), and whether a remaining amount is sufficient (excluding a case where an empty container is stored) (S130), and if at least one condition is not satisfied, an alarm is displayed on the display unit 15, and the container carry-out processing is ended.

When there are a usable specimen rack and a container containing a detergent, an additional carry-out condition is checked (step S140). When the additional carry-out condition (511, 512 in FIG. 5) is set and the number of times of carry-out (528, 534 in FIG. 5) is satisfied, it is checked that an additional container (529 in FIG. 5) is registered (step S150) and there is a remaining amount of the additional container (step S160), the container to be transferred to the rack and a transfer position (Pos. 1 or the like) on the rack are determined, and the container transfer to the rack is started (step S170).

When cooperation carry-out is not applied (step S180), the rack on which the container is placed is transported to the analyzer via a transport unit after the transfer of all the containers is completed (steps S200 to S240 in FIG. 8). Then, the rack 18, on which the container 17 is placed, is moved to the sampling lines 5a and 6a of the analyzers 5 and 6 (step S200), and the pipetters 5c and 6c are moved from a standby position to above the container 17 and lowered to come into contact with the detergent in the container 17. The pipetter coming into contact with the detergent aspirates the detergent, is raised while holding the detergent in its nozzle and moved to above the diluent tanks 5d and 6d, and discharges the detergent in the pipetter to the diluent tanks 5d and 6d (step S210).

The detergent discharged to the diluent tanks 5d and 6d reaches the electrodes 5f and 6f via the tubes 5g and 6g, and is discarded to the outside of the analyzer via a waste liquid tube (not shown). After the detergent is consumed in the analyzers 5 and 6, the rack 18 on which the container 17 is placed is transported again to the transfer line 4e via the return transport line 10, the container 17 is stored again in the compartment 4b of the disc 4f, the number of times of carry-out of each container and the number of times of carry-out in a grouped state are recorded in the memory 13, and standby is performed until the next instruction is given (steps S210 to S240 in FIG. 8).

When cooperation carry-out is applied (step S180), it is determined whether grouped containers are to be carried out (step S300), then it is checked whether the rack 18 is in the rack storage unit 2 or at the transfer line 4e (step S310), and when there is no usable rack, an alarm is displayed and the cooperation carry-out is stopped (step S311). When there is a usable rack, it is determined whether there is only one container or a plurality of grouped containers requested by the cooperation carry-out. In the case of only one container, the subsequent processing is performed for the one container, and in the case of a plurality of grouped containers, the subsequent processing (steps S320 to S340) is performed for the plurality of containers.

Next, it is checked whether there is a usable accuracy control specimen (step S320) and whether the remaining amount thereof is sufficient (excluding a case where an empty container is stored) (step S330). When even one condition is not satisfied, an alarm is displayed on the display unit 15 (step S311), and the container carry-out processing is ended.

When there are a usable rack 18 and a container containing the accuracy control specimen, an additional carry-out condition is checked (step S340). When the additional carry-out condition is set and the number of times of carry-out is satisfied, it is checked that an additional container is registered and there is a remaining amount of the additional container (excluding a case where an empty container is stored), and a container to be transferred to the rack and a transfer position (Pos. 1 or the like) on the rack are determined.

After the transfer position on the rack is determined, standby is performed for the elapse of a preset period of time (30 minutes in the example of 550 in FIG. 5). Thereafter, the container transfer is started, and the steps S360 to S410 same as steps S170 and S200 to S240 in FIG. 8 are executed. When an empty container is transported to the analyzer, specimen aspiration from the container 17 is not performed. A specimen nozzle is lowered into the empty container 17, and then water is discharged from the specimen nozzle. The container 17 is filled with water, and the specimen nozzle is immersed.

### (6) Effects

Effects of the embodiment configured as described above will be described.

In general, detergents used for maintenance of an automatic analyzer are procured from a device manufacturer and stored and managed according to a method specified by the manufacturer (for example, storing at room temperature or in cold storage in a dark room). These detergents are necessary for removing contamination of apparatus components (for example, a pipetter for dispensing, a diluent tank, and a flow channel for passing a specimen) and maintaining a good apparatus state. In addition, when the apparatus is cleaned, it is also necessary to use an accuracy control specimen to check whether the same analysis result as that before cleaning can be obtained. When the same analysis result cannot be obtained, it is necessary to perform management to obtain the same analysis result by recalibrating an electrode and a reagent by using a standard solution.

However, when the detergent is filled in a container and provided and used in the apparatus at room temperature, condensation of a detergent component due to evaporation and volatilization or decomposition of the detergent component occur, and a stable effect cannot be obtained over a long period of time. Therefore, when using such a detergent, it is necessary that the detergent is stored in an external refrigerator, a user takes out the detergent from the external refrigerator every time the detergent is used, a scheduled consumption amount is dispensed into a container corresponding to the analyzer, the container containing the detergent is provided to the apparatus, and a cleaning process is instructed from an operation unit of the apparatus.

Since the cleaning process takes time (for example, 1 hour), if the detergent and the accuracy control specimen are simultaneously prepared and set in the apparatus, and the cleaning process is started, the accuracy control specimen is consumed from waiting for the completion of the cleaning process. Thus, there is a problem that the accuracy control specimen is condensed or enzymes in the accuracy control specimen are inactivated during the cleaning process, and a correct measurement result cannot be obtained.

On the other hand, in the embodiment, a container containing a detergent is stored in a container storage apparatus having a cold insulation function, the container storage apparatus is connected to an analyzer, the detergent container is taken out at a time specified by a user, transported to the analyzer, and a cleaning process is performed. In addition, different cleaning processes can be executed according to the number of executions of the cleaning process. Further, by creating a program in advance, the accuracy control specimen is taken out after the cleaning process and transported to the analyzer, so that the accuracy control can be performed without degrading the quality of the accuracy control specimen. Accordingly, it is possible to reduce a user's burden on maintenance and accuracy control and appropriately maintain and manage the analyzer.

### Reference Signs List

1: rack loading unit
2: rack storage unit
3: container ID acquisition unit (of rack loading unit 1)
4: container storage apparatus
4a: identification information reader
4b: compartment
4c: container ID acquisition unit (of container management device 4)
4d: arm
4e: transfer line
4f: disc
4g: refrigeration unit
4h: shutter
5, 6: analyzer
5c: pipetter
5d: diluent tank
5f: electrode
5g: tube
9: feed transport line
10: return transport line
11: rack ID acquisition unit
12: control unit
13: memory
14: operation unit
15: display unit
16: rack collection unit
17: container
18: rack

## Claims

1. A container storage apparatus that is connectable to an analyzer configured to analyze a specimen and carries in and out a container between the container storage apparatus and the analyzer, the container storage apparatus comprising:
a container storage unit configured to store a plurality of first containers that contain a first liquid including at least an accuracy control specimen or a standard solution and used for analysis of a specimen, and a plurality of second containers that contain a second liquid including at least a cleaning solution and used for maintenance of the analyzer; and
a refrigeration unit configured to refrigerate the container storage unit.

2. The container storage apparatus according to claim 1, comprising:
a transport unit configured to transport the first container and the second container between the container storage unit and the analyzer;
a receiving unit configured to receive a carry-out instruction for carrying out the first container and the second container from the container storage unit; and
a control unit configured to control the transport unit, wherein
when a preset condition is satisfied, the control unit controls the transport unit to transport the first container and/or the second container to the analyzer.

3. The container storage apparatus according to claim 2, wherein
the preset condition is any one of a container carry-out time, the number of times a specimen probe is used in the analyzer, a period of time when the analyzer is in a standby state, a period of time when the analyzer is in an operating state, and a maintenance execution state of the analyzer.

4. The container storage apparatus according to claim 2, wherein
in a case where a preset additional carry-out condition is satisfied after the first container and/or the second container are/is transported to the analyzer with the preset condition being satisfied, the transport unit is controlled to transport a first container and/or a second container different from the transported first container and/or second container to the analyzer.

5. The container storage apparatus according to claim 4, wherein
the additional transport condition is registered in the control unit as a group including at least two of an additional transport condition 1 and an additional transport condition 2, and it is possible to set each of the additional transport condition 1 and the additional transport condition 2 as a different transport condition.

6. The container storage apparatus according to claim 5, wherein
the container storage apparatus is provided with a cooperation carry-out function of executing an additional transport group registered separately from the group described above in a case where a preset cooperation carry-out condition is satisfied after all additional transport conditions registered in the control unit as the group described above are satisfied and the transport of all the first containers and/or second containers to the analyzer is completed.

7. The container storage apparatus according to any one of claims 2 to 6, wherein
the container to be transported between the container storage unit and the analyzer includes an empty container in addition to the first container and the second container.

8. The container storage apparatus according to any one of claims 2 to 6, wherein
the transport unit transports the container placed on a rack.

9. The container storage apparatus according to any one of claims 2 to 6, comprising:
a lid configured to cover an opening portion of the container storage unit;
a shutter having a function of opening and closing the opening portion;
a transfer line disposed parallel to a transport line that connects the analyzer and the container storage apparatus; and
a robotarm configured to grip the container.

10. The container storage apparatus according to any one of claims 2 to 6, comprising:
a rack storage unit configured to store a rack; and
a transport unit configured to transport the rack between the analyzer and the rack storage unit.

11. The container storage apparatus according to claim 10, wherein
the control unit performs control to specify a combination of containers to be placed on the rack, and specify a position of the container on the rack.

12. The container storage apparatus according to any one of claims 2 to 6, wherein
the control unit specifies a target module for carrying out the container.

13. The container storage apparatus according to any one of claims 2 to 6, wherein
it is possible to set an expiration date of the first liquid and/or the second liquid, and
when the set expiration date of the first liquid and/or the second liquid is exceeded, the control unit performs control to notify an operator that the set expiration date of the first liquid and/or the second liquid is exceeded.
